Europäisches Patentamt

European Patent Office

Office européen des brevets

(19)

(11) Veröffentlichungsnummer: **0 199 162 B1**

(12) **EUROPÄISCHE PATENTSCHRIFT**

(45) Veröffentlichungstag der Patentschrift: **27.02.91**

(51) Int. Cl.⁵: **G01S 13/82**

(21) Anmeldenummer: **86104619.1**

(22) Anmeldetag: **04.04.86**

(54) Informationsübertragungssystem.

(30) Priorität: 20.04.85 DE 3514426

(43) Veröffentlichungstag der Anmeldung:
29.10.86 Patentblatt 86/44

(45) Bekanntmachung des Hinweises auf die
Patenterteilung:
27.02.91 Patentblatt 91/09

(84) Benannte Vertragsstaaten:
AT CH DE FR LI NL

(56) Entgegenhaltungen:
EP-A- 0 082 491          EP-A- 0 111 591
EP-A- 0 111 592          DE-A- 1 541 703
DE-A- 3 027 981          FR-A- 2 281 620
FR-A- 2 527 870

(73) Patentinhaber: **ANT Nachrichtentechnik GmbH**
**Gerberstrasse 33**
**D-7150 Backnang(DE)**

(72) Erfinder: **Zappe, Helmut, Dipl.-Ing.**
**Steinbacher Strasse 11**
**D-7159 Auenwald(DE)**

**Beschreibung**

Die vorliegende Erfindung betrifft ein Informationsübertragungssystem, bestehend aus einer Abfrageeinheit und einer Antworteinheit, wobei die Antworteinheit ein von der sie passierenden Abfrageeinheit ausgesendetes Trägersignal empfängt, dieses Trägersignal einem Frequenzumsetzer zuführt und das aus der Frequenzumsetzung hervorgehende Signal nach Modulation mit der in der Antworteinheit abgespeicherten Information wieder an die Abfrageeinheit zurücksendet, die das modulierte Signal empfängt und demoduliert.

Ein derartiges Informationssystem, wie aus der DE-A1 30 27 981 bekannt ist, kann z.B. dazu verwendet werden, um Informationen, wie etwa Entfernungsangaben oder höchstzulässige Geschwindigkeiten, von einer Gleisstrecke an Züge zu übermitteln. Um beispielsweise im Rangierbetrieb die Waggons in einer gewünschten Reihenfolge zusammenzustellen, wird an Jedem Waggon eine Antworteinheit angebracht, in der alle wissenswerten Daten des Jeweiligen Waggons abgespeichert sind. An der Schienenstrecke ist eine Abfrageeinheit fest installiert, welche die aus den Antworteinheiten herausgelesenen Daten an einen Zentralrechner übermittelt. Der Zentralrechner, der die Reihenfolge der Waggons und deren Bestimmungsbahnhöfe kennt, kann nun dementsprechend die Weichen steuern, so daß die richtige Aneinanderreihung der Waggons erfolgt.

Neben der Organisation und Steuerung von gleisgebundenen Fahrzeugen läßt sich dieses Informationsübertragungssystem z.B. auch zur Regelung des Straßenverkehrs ausnutzen. Die Fahrzeuge würden in diesem Fall mit Abfrageeinheiten bestückt, die beim Vorbeifahren aus an den Straßen installierten Antworteinheiten Informationen über Ort, Verkehrsdichte etc. herauslesen. überall, wo es um die Organisation von mobilen Gütern geht, erweist sich eine solche Informationsübertragungseinrichtung als zweckmäßig.

Bei dem aus der DE-A1 30 27 981 bekannten Informationsübertragungssystem werden von der Abfrageeinheit zwei Trägersignale an die Antworteinheit ausgesendet. Beim Mischvorgang in der Antworteinheit entsteht aus diesen zwei Trägersignalen ein drittes Trägersignal, dem die in der Antworteinheit abgespeicherte Information aufmoduliert wird. Für die Informationsübertragung müssen bei diesem bekannten System also drei verschiedene Frequenzbereiche zur Verfügung gestellt werden.

Bei der heute vorherrschenden großen Belegungsdichte der ausnutzbaren Frequenzen ist es erstrebenswert mit möglichst wenigen Frequenzen für die Informationsübertragung auszukommen.

Der Erfindung liegt daher die Aufgabe zugrunde, ein Informationsübertragungssystem der eingangs genannten Art anzugeben, das nur zwei verschiedene Frequenzen zur Informationsübertragung benötigt und mit möglichst geringem Aufwand realisiert ist.

Erfindungsgemäß wird diese Aufgabe dadurch gelöst, daß die Frequenzumsetzung in einem parametrischen Umsetzer erfolgt, dessen zeitlich veränderbare nichtlineare Reaktanz von dem einzigen empfangenen Trägersignal angesteuert wird und in an sich bekannter Weise mit mindestens zwei Schwingkreisen gekoppelt ist, wobei diese Schwingkreise auf solche Frequenzen abgestimmt sind, deren Summe mit der Frequenz des die nichtlineare Reaktanz steuernden Signals übereinstimmt, und daß die von einem der beiden Schwingkreise abgegebene Schwingung als Trägersignal für die abgespeicherte Information dient.

Der Aufbau und die Funktionsweise von parametrischen Verstärkern und Mischern geht z.B. aus der NTZ, Band 32, Heft 11 (1979 S. 734 - 737 oder der DE-A-15 41 703 hervor.

Zweckmäßige Ausführungen der Erfindung gehen aus den Unteransprüchen hervor.

An Hand von in der Zeichnung dargestellten Ausführungsbeispielen wird nun die Erfindung näher erläutert. Es zeigen:

Fig. 1     das Blockschaltbild eines Informationsübertragungssystems,

Fig. 2a     das Prinzipschaltbild eines parametrischen Umsetzers,

Fig. 2b     eine Schaltungserweiterung des Umsetzers zur Amplitudenmodulation des umgesetzten Trägersignals und

Fig. 2c     eine schaltungserweiterung des Umsetzers zur Frequenzmodulation des umgesetzten Trägersignals.

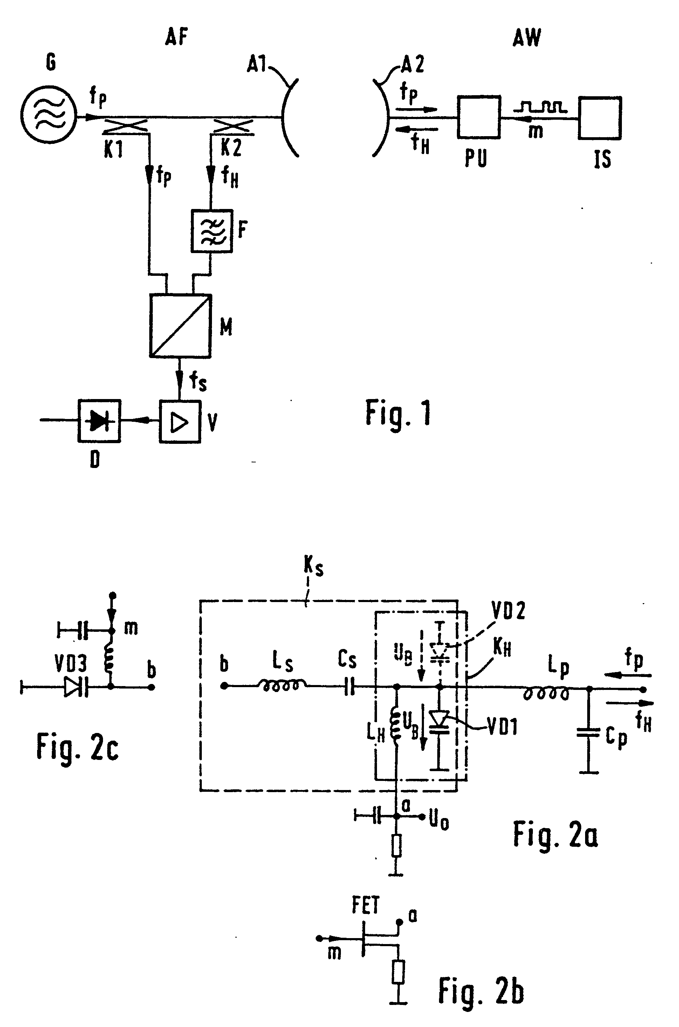

Das in der Fig. 1 dargestellte Informationsübertragungssystem besteht aus einer Abfrageeinheit AF und einer Antworteinheit AW.

Die Abfrageeinheit enthält einen Generator G, der ein Trägersignal mit der Frequenz $f_p$ erzeugt. Über einen Koppler K1 wird ein Anteil dieses Trägersignals abgekoppelt und der andere Anteil einer Antenne A1 zugeführt, welche das Trägersignal zu einer Antworteinheit AW überträgt.

Während sich die Antworteinheit AW an der Abfrageeinheit AF vorbeibewegt, empfängt sie mit Hilfe der Antenne A2 das Trägersignal der Frequenz $f_p$. In einem parametrischen Umsetzer PU, auf den weiter unten noch eingegangen wird, erfolgt eine Frequenzumsetzung des Trägersignals mit der Frequenz $f_p$ auf ein Signal mit der Frequenz $f_H$. Diesem Signal wird die in einem Informationsspeicher IS abgelegte Information m aufmoduliert und das modulierte Signal mit der Frequenz $f_H$ über die Antenne A2 an die Abfrageeinheit AF zurückgesendet.

Das modulierte Signal mit der Frequenz $f_H$ wird von der Antenne A1 der Abfrageeinheit AF aufgenommen und hinter der Antenne von einem Koppler K2 ausgekoppelt. Ein Filter F sperrt alle ungewünschten Frequenzen und läßt nur das Signal mit der Frequenz $f_H$ an einen Eingang eines Mischers M durch. An den zweiten Eingang des Mischers M gelangt das vom Koppler K1 kommende Trägersignal mit der Frequenz $f_p$. Der Mischer M setzt nun das mit der Information aus der Antworteinheit AW modulierte Signal in eine andere Frequenz $f_s$ um. Das modulierte Signal mit der Frequenz $f_s$ wird schließlich über einen Verstärker V einem Demodulator D zugeführt, an dessen Ausgang dann die Information der Antworteinheit AW vorliegt.

Ein parametrischer Umsetzer PU, dessen Prinzipschaltbild in der Fig. 2a dargestellt ist, ermöglicht es, das einzige ihm zugeführte Trägersignal mit der Frequenz $f_p$ in eine andere Frequenz $f_H$ umzusetzen, ohne daß wie bei üblichen Mischern ein zweites Trägersignal erforderlich ist.

Der parametrische Umsetzer enthält eine veränderbare nichtlineare Reaktanz, z.B. eine Varaktordiode VD1, mit der zwei Schwingkreise gekoppelt sind. Der eine Schwingkreis $K_S$ ist durch eine Induktivität LS und eine Kapazität $C_S$ und der zweite Schwingkreis $K_H$ durch eine Induktivität $L_H$ und die Kapazität der Varaktordiode VS1 realisiert. Der Schwingkreis KS und dessen Kopplung mit der Varaktordiode VD1 ist durch die strichlierte Umrandung und der Schwingkreis $K_H$ und dessen Kopplung mit der Varaktordiode VD1 ist durch die strichpunktierte Umrandung in der Fig. 2a verdeutlicht.

Die Varaktordiode VD1 erhält über ihr vorgeschaltetes Filter $L_p$, $C_p$ ein Steuersignal und zwar das Trägersignal mit der Frequenz $f_p$. Sind die beiden Schwingkreise $K_S$ und $K_H$ so abgestimmt, daß die Summe ihrer Resonanzfrequenzen $f_s + f_H$ gleich der Frequenz $f_p$ des die Varaktordiode VD1 ansteuernden Trägersignals ist, so tritt eine Entdämpfung der beiden Schwingkreise $K_S$ und $K_H$ auf, und die parametrische Schaltung schwingt bei den Frequenzen $f_s$ und $f_H$. Es ist sinnvoll einen der beiden Schwingkreise breitbandig abzustimmen und den an-deren Schwingkreis mit hoher Güte (schmalbandig) auszulegen, da letzterer dann die Frequenzstabilität der parametrischen Anordnung bestimmt. Im vorliegenden Ausführungsbeispiel sei der Schwingkreis $K_H$ breitbandig auf die Frequenz $f_H$ abgestimmt. Seine Schwingung mit der Frequenz $f_H$ wird am Ausgang des parametrischen Umsetzers abgegriffen und zur Übertragung der Information der Antworteinheit AW an die Abfrageeinheit AF verwendet.

An der Varaktordiode VD1 wird das Trägersignal mit der Frequenz $f_p$ gleichgerichtet. Die dabei entstehende Gleichspannung $U_B$ kann als Betriebsenergie für die Schaltungsteile (z.B. Informationsspeicher IS) ausgenutzt werden. Die Antworteinheit AW läßt sich somit vorteilhafterweise ohne eigene Energiequelle betreiben. Dadurch wird ein universeller Einsatz solcher Antworteinheiten möglich.

Falls erforderlich, läßt sich eine höhere Betriebsenergie aus den Gleichspannungsanteilen einer oder mehrerer wechselspannungsmäßig parallel und gleichspannungsmäßig in Reihe zu der bereits erwähnten Varaktordiode VD1 geschalteten Varaktordiode gewinnen. Im Ausführungsbeispiel der Fig. 2a ist z.B. nur eine (strichliert gezeichnete) Varaktordiode VD2 zusätzlich in die Schaltung eingefügt.

Die beschriebene in Fig. 2a prinzipiell dargestellte Schaltung eines parametrischen Umsetzers läßt sich sehr kompakt in Streifenleitungstechnik oder auch in Hohlleitertechnik (vgl. NTZ, Band 32, Heft 11 (1979), S. 734 - 738 und DE-PS 15 41 703) realisieren.

Auf sehr einfache Weise kann die im Umsetzer entstehende Schwingung mit der Frequenz $f_H$ entweder amplituden- oder frequenzmoduliert werden. Wird beispielsweise in den Diodengleichspannungsweg am Punkt a ein in Fig. 2b gezeigter elektronischer Schalter, z.B. ein Feldeffekttransistor FET, eingefügt und wird dieser elektronische Schalter von dem Informationssignal m aus dem Informationsspeicher IS gesteuert, so wird die Gleichstromzuführung im Takt des Informationssignals unterbrochen oder geschlossen. Dementsprechend verschiebt sich der Arbeitspunkt der Varaktordiode VD1 im Takt des Informationssignals m, was eine Verstimmung der (des) Schwingkreise(s) zur Folge hat. Bei einer Verstimmung eines oder beider Schwingkreise ist aber die oben genannte Schwing bedingung für den Umsetzer nicht mehr erfüllt, die besagt, daß die Summe der Resonanzfrequenzen $f_s + f_H$ der beiden Schwingkreise $K_S$ und $K_H$ gleich der Frequenz $f_p$ des die Varaktordiode VD1 steuernden Trägersignals sein muß. Bei einer Schwingkreisverstimmung gibt also der parametrische umsetzer auch kein Signal der Frequenz $f_H$ mehr ab. Demnach liegt am Ausgang des parametrischen Umsetzers in Abhängigkeit des Informationssignals m entweder ein Signal mit der Frequenz $f_H$ vor oder es liegt keins vor. Somit erfährt das Signal mit der Frequenz $f_H$ durch das Informationssignal m eine Amplitudenmodulation.

Schließt man z.B. an den Punkt b des auf die Frequenz $f_s$ schmalbandig abgestimmten Schwingkreises $K_S$ eine in Fig. 2c dargestellte Varaktordiode VD3 an und steuert diese Varaktordiode VD3 mit dem Informationssignal m an, so erfährt dieser Schwingkreis eine Resonanzfrequenzänderung im Takte des Informationssignals. Der Resonanzfrequenzänderung dieses Schwingkreises $K_S$ folgt die Resonanzfrequenz $f_H$ des breit-bandig abgestimmten zweiten Schwingkreises $K_H$, so daß schließlich der parametrische Umsetzer ein mit dem Informationssignal m frequenzmoduliertes Signal der Frequenz $f_H$ abgibt.

**Ansprüche**

1. Informationsübertragungssystem, bestehend aus einer Abfrageeinheit (AF) und einer Antworteinheit (AW), wobei die Antworteinheit (AW) von der sie passierenden Abfrageeinheit (AF) aus-gesendetes Trägersignal ($f_P$) empfängt, dieses Trägersignal ($f_P$) einem Frequenzumsetzer (PU) zuführt und das aus der Frequenzumsetzung hervorgehende Signal ($f_H$) nach Modulation mit der in der Antworteinheit (AW) abgespeicherten Information (m) wieder an die Abfrageeinheit (AF) zurücksendet, die das modulierte Signal ($f_H$) empfängt und demoduliert, dadurch gekenn zeichnet, daß die Frequenzumsetzung in einem parametrischen Umsetzer (PU) erfolgt, dessen zeitlich veränderbare nichtlineare Reaktanz (VD1) von dem einzigen empfangenen Trägersignal ($f_P$) angesteuert wird und in an sich bekannter Weise mit mindestens zwei Schwingkreisen ($K_S,K_H$) gekoppelt ist, wobei diese Schwingkreise auf solche Frequenzen ($f_S$, $f_H$) abgestimmt sind, deren Summe mit der Frequenz ($f_P$) des die nichtlineare Reaktanz (VD1) steuernden Trägersignals übereinstimmt, und daß die von einem der beiden Schwingkreise (KS, $K_H$) abgegebene Schwingung ($f_H$) als Trägersignal für die abgespeicherte Information (m) dient.

2. Informationsübertragungssystem nach Anspruch 1, dadurch gekennzeichnet , daß ein Schwingkreis ($K_H$) breitbandig und der andere Schwingkreis ($K_S$) schmalbandig abgestimmt ist.

3. Informationsübertragungssystem nach Anspruch 1, dadurch gekennzeichnet , daß durch Arbeitspunktverschiebung der veränderbaren nichtlinearen Reaktanz (VD1) im Takte der abgespeicherten Information (m) das vom parametrischen Umsetzer (PU) erzeugte Trägersignal eine entsprechende Amplitudenmodulation erfährt.

4. Informationsübertragungssystem nach Anspruch 3, dadurch gekennzeichnet , daß ein von der abgespeicherten Information (m) gesteuerter Schalter (FET) den Gleichspannungsweg der veränderbaren nichtlinearen Reaktanz (VD1) unterbricht oder schließt.

5. Informationsübertragungssystem nach Anspruch 1, dadurch gekennzeichnet , daß eine in einen Schwingkreis ($K_S$) eingefügte veränderbare nichtlineare Reaktanz (VD3), gesteuert von der abgespeicherten Information (m), die Schwingkreise ($K_S$, $K_H$) im Takte der Information verstimmt, wodurch das vom parametrischen Umsetzer (PU) erzeugte Trägersignal eine Frequenzmodulation erfährt.

6. Informationsübertragungssystem nach einem der vorhergehenden Ansprüche, dadurch gekennzeichnet , daß ein von dem dem parametrischen Umsetzer (PU) zugeführten Trägersignal abgespaltener Anteil die in der Antworteinheit (AW) vorhandenen Schaltungselemente mit Betriebsenergie ($U_B$) versorgt.

7. Informationsübertragungssystem nach einem der vorhergehenden Ansprüche, dadurch gekennzeichnet , daß ein an der nichtlinearen Reaktanz (VD1) gleichgerichteter Signalanteil des dem Umsetzer zugeführten Trägersignals als Betriebsenergie für die in der Antworteinheit (AW) vorhandenen Schaltungselemente zur Verfügung steht.

8. Informationsübertragungssystem nach Anspruch 7, dadurch gekennzeichnet , daß mehrere wechselspannungsmäßig parallelgeschaltete und gleichspannungsmäßig in Reihe geschaltete nichtlineare Reaktanzen (VD1, VD2) vorhanden sind, die das empfangene Trägersignal gleichrichten, und daß die an den nichtlinearen Reaktanzen anliegenden Gleichspannungsanteile die Betriebsspannung für die in der Antworteinheit (AW) vorhandenen Schaltungselemente bilden.

9. Informationsübertragungssystem nach einem der vorhergehenden Ansprüche, dadurch gekennzeichnet , daß die veränderbaren nichtlinearen Reaktanzen (VD1, VD2, VD3) Varaktordioden sind.

**Claims**

1. An information transfer system, comprising an interrogation unit (AF) and a response unit (AW), where the response unit (AW) receives a carrier signal ($f_p$) transmitted by the interrogation unit (AF) passing it, forwards this carrier signal ($f_p$) to a frequency converter (PU) and returns the signal ($f_H$), resulting from the frequency conversion after it has been modulated with the information (m) stored in the response unit (AW), back to the interrogation unit (AF), which receives the modulated signal ($f_H$) and demodulates it, characterized in that the frequency conversion takes place in a parametric converter (PU), the temporally adjustable, non-linear reactance (VD1) is triggered by the single carrier signal ($f_p$) received and is coupled in a manner known per se with at least two oscillating circuits ($K_S$, $K_H$), the sum of which corresponds to the frequency ($f_p$) of the carrier signal controlling the non-linear reactance (VD1), and in that the oscillation ($f_H$) emitted by one of the two oscillating circuits ($K_S$, $K_H$) is used as carrier signal for the stored information (m).

2. An information transfer system in accordance with claim 1, characterized in that one oscillation circuit ($K_H$) is tuned to a broad band and the other oscillation circuit ($K_S$) to a narrow band.

3. An information transfer system in accordance with claim 1, characterized in that the carrier signal generated by the parametric converter (PU) experiences a corresponding amplitude modulation by means of the operating point displacement of the adjustable, non-linear reactance (VD1) in the cycle of the stored information (m).

4. An information transfer system in accordance with claim 3, characterized in that a switch (FET) controlled by the stored information (m) interrupts or closes the dc voltage path of the adjustable, non-linear reactance (VD1).

5. An information transfer system in accordance with claim 1, characterized in that an adjustable, non-linear reactance (VD3), inserted in one oscillation circuit ($K_S$) detunes, controlled by the stored information (m), the oscillation circuits ($K_S$, $K_H$) in the cycle of the information, because of which the carrier signal generated by the parametric converter (PU) experiences a frequency modulation.

6. An information transfer system in accordance with one of the preceding claims, characterized in that a portion split off from the carrier signal supplied to the parametric converter (PU) supplies the switching elements present in the response unit (AW) with operating power ($U_B$).

7. An information transfer system in accordance with one of the preceding claims, characterized in that a signal portion, rectified by the non-linear reactance (VD1), of the carrier signal supplied to the converter is available as operating power for the switching elements present in the response unit (AW).

8. An information transfer system in accordance with claim 7, characterized in that there is a plurality of non-linear reactances (VD1, VD2), which are switched in parallel in ac and in series in dc and rectify the received carrier signal, and in that the dc portions connected to the non-linear reactances form the operating voltage for the switching elements present in the response unit (AW).

9. An information transfer system in accordance with one of the preceding claims, characterized in that the adjustable, non-linear reactances (VD1, VD2, VD3) are varactor diodes.

**Revendications**

1. Système de transmission d'informations, constitué par une unité d'interrogation (AF) et par une unité de réponse (AW), l'unité de réponse (AW) recevant un signal de porteuse ($f_p$) émis par l'unité d'interrogation (AF) qui passe devant elle, envoyant ce signal de porteuse (fp) à un convertisseur de fréquence (PU), et renvoyant à l'unité d'interrogation (AF) le signal ($f_H$) issu de la conversion de fréquence, après modulation par l'information (m) prise en mémoire dans l'unité de réponse (AW), l'unité d'interrogation recevant ledit signal modulé ($f_H$) et le démodulant, caractérisé par le fait que la conversion de fréquence s'effectue dans un convertisseur paramétrique (PU) dont la réactance non linéaire (VD1), modifiable dans le temps, est commandée par le seul signal de porteuse reçu ($f_p$), et est couplée, de manière connue en soi, à au moins deux circuits oscillants ($K_S$, $K_H$), lesquels circuits oscillants sont accordés sur des fréquences ($f_S$, $f_H$) telles que leur somme soit en accord avec la fréquence $f_P$ du signal de porteuse commandant la réactance non linéaire (VD1), et par le fait que l'oscillation ($f_H$) fournie par l'un des deux circuits oscillants ($K_S$, $K_H$) serve de signal de porteuse pour l'information prise en mémoire (m).

2. Système de transmission d'informations selon revendication 1, caractérisé par le fait qu'un circuit oscillant ($K_H$) est accordé à large bande et l'autre circuit oscillant ($K_S$) est accordé à bande étroite.

3. Système de transmission d'informations selon revendication 1, caractérisé par le fait que le signal de porteuse produit par le convertisseur paramétrique (PU) subit une modulation d'amplitude correspondante - sous l'effet du déplacement du point de travail de la réactance non linéaire modifiable (VD1) au rythme de l'information prise en mémoire (m).

4. Système de transmission d' informations selon revendication 3, caractéris é par le fait qu'un interrupteur (FET) commandé par l'information prise en mémoire (m) ouvre ou ferme le trajet de tension continue de la réactance non linéaire modifiable (VD1).

5. Système de transmission d'informations selon revendication 1, caractérisé par le fait qu'une réactance non linéaire modifiable (VD3) insérée dans un circuit oscillant (K$_S$), commandée par l'information prise en mémoire (m), désaccorde les circuits oscillants (K$_S$, K$_H$) au rythme de l'information, ce qui a pour effet que le signal de porteuse produit par le convertisseur paramétrique (PU) subit une modulation de fréquence.

6. Système de transmission d'informations selon l'une des revendications précédentes, caractérisé par le fait qu'une composante tirée du signal de porteuse amené au convertisseur paramétrique (PU) fournit l'énergie de fonctionnement (U$_B$) aux éléments de circuit présents dans l'unité de réponse (AW).

7. Système de transmission d'informations selon l'une quelconque des revendications précédentes, caractérisé par le fait qu'une composante du signal de porteuse amené au convertisseur , redressée par la réactance non linéaire (VD1), est disponible en tant qu'énergie pour le fonctionnement des éléments de circuit présents dans l'unité de réponse (AW).

8. Système de transmission d'informations selon revendication 7, caractérisé par le fait qu'il y a, branchées en parallèle du point de vue tension alternative et branchées en série du point de vue tension continue, des réactances non linéaires (VD1, VD2) qui redressent le signal de porteuse reçu, et par le fait que les composantes de tension continue présentes sur les réactances non linéaires forment la tension pour le fonctionnement des éléments de circuit présents dans l'unité de réponse (AW).

9. Système de transmission d'informations selon l'une quelconque des revendications précédentes, caractérisé par le fait que les réactances non linéaires variables (VD1, VD2, VD3) sont

des diodes varactors.

Fig. 1

Fig. 2c

Fig. 2a

Fig. 2b